# EUROPÄISCHE PATENTSCHRIFT

(11) **EP 4 355 474 B1**
(45) Veröffentlichungstag und Bekanntmachung des Hinweises auf die Patenterteilung: **14.05.2025**
(21) Anmeldenummer: 22732044.7
(22) Anmeldetag: 27.05.2022
(51) Int. Cl.: B01J 19/00, B01J 19/24

(54) **MULTILAGENREAKTOR MIT MEHREREN STRUKTURLAGEN**
MULTILAYER REACTOR WITH SEVERAL STRUCTURAL LAYERS
RÉACTEUR MULTICOUCHE AVEC PLUSIEURS COUCHES STRUCTURELLES

(30) Priorität: 18.06.2021 DE 102021115881
(43) Veröffentlichungstag der Anmeldung: 24.04.2024
(73) Patentinhaber: Ineratec GmbH, 76187 Karlsruhe (DE)
(72) Erfinder: PFEIFER, Peter, 76351 Linkenheim-Hochstetten (DE); FICHTNER, Sebastian, 69124 Heidelberg (DE)
(74) Vertreter: Meissner Bolte Düsseldorf Patentanwälte Rechtsanwälte Partnerschaft mbB
(86) Internationale Anmeldenummer: PCT/EP2022/064420
(87) Internationale Veröffentlichungsnummer: WO 2022/263146

(56) Entgegenhaltungen:
- EP-A2- 1 224 967
- US-A1- 2010 174 124
- US-B2- 7 935 734
- US-B2- 8 122 909

## Beschreibung

Die vorliegende Erfindung betrifft einen Reaktor mit Multilagenstruktur, wobei die verschiedenen Lagen auf eine besondere Art und Weise strukturiert sind, um einen verbesserten Wärmetransport während katalytische Reaktionen zu ermöglichen. Weiterhin betrifft die vorliegende Erfindung Multireaktorstrukturen, Verfahren zur Gestellung der Reaktoren und Multireaktorstrukturen sowie Ver- und Anwendungen.

### Stand der Technik:

In (mikro-)strukturierten Reaktoren können feste Katalysatoren als Schichten oder als Füllungen von Partikeln eingebracht werden. Solche Reaktoren werden üblicherweise für schnelle und hochenergetische Reaktionen eingesetzt, um mit Hilfe eines Schichtaufbaus, also durch alternierende Ebenen mit Durchfluss von Reaktionsmedium und Wärmeübertragungsmedium, einen effizienten Wärmezu- oder - abfluss zu gewährleisten und damit die Reaktion möglichst am Temperatursollwert zu betreiben. Bei der Füllung eines solchen Reaktors mit Partikeln ergeben sich aufgrund der geringen Abmessungen der Strukturen in einer Ebene ein Struktur- zu Partikelgrößenverhältnis von kleiner 10, um einerseits den Druckverlust bei der Durchströmung mit Reaktionsmedium gering zu halten und andererseits die Haftkräfte zwischen einzelnen Partikeln nicht größer als die Gewichtskraft der einzelnen Partikel werden zu lassen und damit eine Agglomeration zu vermeiden. Agglomeration ist ungünstig und behindert das Befüllen der Strukturen mit Katalysator. Da aufgrund der ebenen Wandfläche und den Partikelkontakten in der Wandnähe eine höhere Bettporosität gegeben ist, entsteht durch ein kleines Struktur- zu Partikelgrößenverhältnis ein beträchtlicher Einfluss der reduzierten Porosität in Wandnähe und damit eine ungleiche Geschwindigkeit der Reaktanten. Ein Lösungsansatz zur Verbesserung der gleichmäßigen Durchströmung sind gefräste oder geätzte Strukturen mit versetzten Säulen, wie in der WO 2017/013003. Die kostenintensive Strukturherstellung und die Tatsache, dass es sich bei der Durchmischung an den Säulen nur um einen zweidimensionalen Ansatz handelt, bedeuten Limitierungen.

Im Stand der Technik beschriebene Reaktoren weisen üblicherweise einen oder mehrere Katalysator(en) zur Durchführung wenigstens einer exothermen Reaktion auf. Mit abnehmender katalytischen Aktivität muss dieser Katalysator in regelmäßigen, dem Fachmann bekannten zeitlichen Abständen erneuert werden, indem er aus dem Reaktor entfernt und wieder neu befüllt wird. Dazu muss der Reaktor ein gleichmäßiges Beladen mit Katalysator und eine Entnahme desselben ermöglichen. Zur Ableitung der Exothermie mittels Wärmeleitung ist zudem eine stoffschlüssige Verbindung zur Kühlpassage erforderlich. Diese Verbindungen dürfen einen Maximalabstand nicht überschreiten. Daraus ergeben sich verschiedene Herausforderungen. Beispielsweise eignen sich die einzelnen Lagen aufgrund des Designs im Wesentlichen nur für den Gebrauch in diffusionsgeschweißten Mikrostrukturreaktoren. Es müssen möglichst viele durchgängig übereinanderliegende Verbindungen senkrecht zur Strömungsrichtung bestehen, so dass der Wärmetransport durch mehrere Ebenen von Platten hinweg bis zur nächsten Kühlebene maximiert wird.

Bei den Reaktoren gemäß Stand der Technik ist es oft ein Problem, dass sich die Strömung nicht ausreichend gleichmäßig in den Kavitäten im Reaktor verteilen kann und ungleiche Porositäten der Schüttung, sowie die Porositätsunterschiede in Wandnähe nicht hinreichend ausgeglichen werden, damit die Verweilzeit der Reaktanten in allen Katalysatorzonen gleich ist.

Ebenso sollte der Katalysator gleichmäßig in den Reaktorraum einfüll- und wieder entfernbar sein, dies ist bei einigen Designs gemäß Stand der Technik nicht oder nur geringfügig erfüllt.

Weiterhin sollte einerseits ein möglichst hoher Anteil an Katalysatorvolumen im Reaktor eingebracht werden können, aber der Wärmetausch und Wärmetransport möglichst groß sein, so dass möglichst isotherme Bedingungen im Reaktor vorliegen. Auch dieser Problematik wird bei den Reaktoren gemäß Stand der Technik oft nicht ausreichend begegnet.

Aus der WO 90/13784 A1 sind zum Beispiel verschiedenen Wärmetauscherstrukturen bekannt, jedoch keine Reaktoren und keinerlei Hinweise auf die um einiges erschwerten Strömungsbedingungen und resultierende Herausforderungen, die durch eine Katalysatorbefüllung hervorgerufen werden.

Aus EP 1 995 545 A2 ist z.B. ein Design umfassend Rechteckkanäle bekannt, bei dessen Anwendung es jedoch zu sich ausbildenden Vorzugsströmungen innerhalb der Katalysatorschüttung, verursacht durch ungleichmäßige Druckverluste über den Strömungsquerschnitt in der Hauptströmungsrichtung, kommen kann, sodass sich ungleichmäßige Druck- und damit Strömungsverhältnisse bilden und es damit einhergehend zu einer ungleichmäßigen Temperaturverteilung im Reaktor und im Endeffekt zu geringerer Selektivität kommen kann.

Aus der WO 2006/102675 A1 sind Strukturen mit Hauptkanal beschrieben, bei denen verschiedene Lagen zu mindestens 50% übereinandergelegt sind. Die Strukturen erfordern Reynoldszahlen von größer 100 und die Strukturen sollen mit Katalysator beschichtet sein.

Als weiterer Stand der Technik könnten noch EP 2 543 434 A1, US 6,968,892 B1 und DE 10 2011 079 634 A1 sowie EP 1 224 967 A2, US 2010/174124 A1, US 7,935,734 B2 genannt werden.

Insofern besteht ausgehend von dem bekannten Stand der Technik immer noch ein erhebliches Bedürfnis, den bisherigen Stand der Technik zu verbessern.

### Aufgabe:

Aufgabe der vorliegenden Erfindung war es demgemäß, die vorstehend beschriebenen Nachteile des Standes der Technik zu überwinden und Reaktoren zur Verfügung zu stellen, welche diese Probleme nicht mehr, oder zumindest nur in erheblich geringerem Maße aufweisen.

Es sollte ein Reaktordesign gefunden werden, dass mehr Flexibilität bei der Herstellung ermöglicht und nicht auf Diffusionsschweißen beschränkt ist, sondern auch andere Herstellungsarten erlaubt.

Es sollte zudem ein Design gefunden werden, bei dem sich in einem im Vergleich zum Stand der Technik verbesserten Maße die Strömung gleichmäßig in den Kavitäten im Reaktor verteilen kann und ungleiche Porositäten der Schüttung, sowie die Porositätsunterschiede in Wandnähe ausgeglichen werden.

Die Reaktoren sollten zudem einfach mit Katalysator befüllbar sein und der Katalysator dann einfach wieder austauschbar sein.

Zudem sollten Reaktoren gefunden werden, bei denen einerseits ein möglichst hoher Anteil an Katalysatorvolumen eingebracht werden kann, aber andererseits der Wärmetausch und Wärmetransport möglichst groß ist, so dass möglichst isotherme Bedingungen im Reaktor vorliegen.

Es soll weiterhin auf mit Katalysator bzw. katalytisch wirksamem Material beschichtete Reaktorstrukturen verzichtet werden, um einerseits einfachere Herstellung zu ermöglichen und andererseits Be- und Wiederbefüllung, gegebenenfalls auch mit anderen Katalysatoren, zu ermöglichen.

Weitere Aufgaben ergeben sich für den Fachmann bei Betrachtung der Ansprüche und aus der nachfolgenden Beschreibung.

### Lösung:

Diese und weitere Aufgaben, die sich für den Fachmann aus der vorliegenden Beschreibung ergeben, werden durch die in den Ansprüchen dargestellten Gegenstände gelöst, wobei die abhängigen Ansprüche bevorzugte und besonders vorteilhafte Ausführungsformen darstellen.

Im Rahmen der vorliegenden Erfindung sind alle Mengenangaben, sofern nicht anders angegeben, als Gewichtsangaben zu verstehen.

Im Rahmen der vorliegenden Erfindung bedeutet der Begriff "Umgebungstemperatur" eine Temperatur von 20°C. Temperaturangaben sind, soweit nicht anders angegeben, in Grad Celsius (°C).

Sofern nichts Anderes angegeben wird, werden die angeführten Reaktionen bzw. Verfahrensschritte bei Umgebungsdruck (=Normaldruck/Atmosphärendruck), d.h. bei 1013 mbar, durchgeführt.

Druckangaben im Rahmen der vorliegenden Erfindung, solange nichts Anderes angegeben ist, bedeuten absolute Druckangaben, d.h. x bar bedeutet x bar absolut (barₐ) und nicht x bar gauge.

Im Rahmen der vorliegenden Erfindung wird unter der Reaktorvorderseite die Seite verstanden, von der aus der Reaktor mit Reaktionsmedium/-fluid angeströmt wird. Im Rahmen der vorliegenden Erfindung wird unter dem Begriff "Seitenwand" in Zusammenhang mit diffusionsverschweißten Multilagenreaktoren der Bereich an den linken und rechten Seiten des Multilagenreaktors (im Unterschied zur Reaktorvorderseite und der ihr gegenüberliegenden Rückseite) verstanden, der die Oberseite und die Unterseite miteinander verbindet und nach außen hin abdichtet. Im Rahmen der vorliegenden Erfindung sind unter den "Punkten", an denen die verschiedenen (Struktur-)Lagen miteinander verbunden sind, reale Punkte (also kleine Flächen) zu verstehen und keine mathematischen Punkte, insofern also das, was in der Mechanik bzw. bei mechanischen Vorrichtungen üblicherweise unter Verbindungspunkten verstanden wird.

Im Rahmen der vorliegenden Erfindung wird unter dem Begriff "Temperaturhub" die maximale Temperaturdifferenz gegenüber der eigentlich erwünschten Reaktionstemperatur verstanden (insbesondere also im Sinne einer Übertemperatur, die gegenüber der Solltemperatur entsteht).

Gegenstand der vorliegenden Erfindung ist insbesondere einen Reaktor mit, bevorzugt geschweißter, Multilagenstruktur, der eine obere fluiddichte Decklage, eine untere fluiddichte Decklage, fluiddichte Seitenwände und dazwischenliegend mindestens einen Reaktionsraum, der durch mehrere übereinanderliegende, zu den Decklagen parallele Strukturlagen definiert wird, aufweist.

Die einzelnen Strukturlagen weisen jeweils eine Struktur von periodisch in mehreren Reihen, jeweils Kante-an-Kante angeordneten Parallelogrammen auf, wobei die Parallelogramme bevorzugt Rechtecke, besonders bevorzugt Rauten, insbesondere Quadrate sind, und wobei die Flächen der Parallelogramme als Aussparungen und die Ränder als Stege ausgestaltet sind.

Jede der Strukturlagen ist gegenüber der darüber bzw., darunter befindlichen um den Faktor 0,5±0,2 und 0,5±0,2, in x- und y-Richtung versetzt, bevorzugt jeweils +0,1, insbesondere bevorzugt jeweils +0,05; dabei wird die größte Kantenlänge der Rauten als 1 normiert und gibt mithin die x-Richtung vor, die y-Richtung ist orthogonal zu dieser in der Ebene der Strukturlage.

Die Seitenkanten der Parallelogrammstrukturen in den Strukturlagen sind in Relation zu Vorder- und Rückseite des Reaktors um 30 bis 60°, bevorzugt 45 bis 55°, besonders bevorzugt 40 bis 50°, insbesondere 45°, gedreht angeordnet, wodurch sich an der Vorder- und Rückseite des Reaktors unvollständige Parallelogrammstrukturen mit nicht komplett mit Stegen umgebenen Aussparungen ergeben.

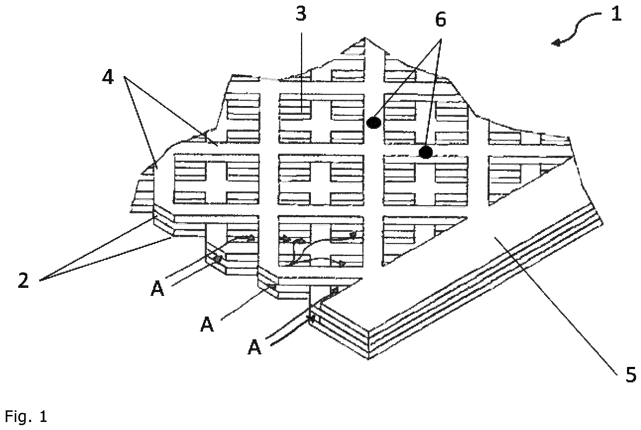

An den Seitenrändern des Reaktors können die geometriebedingt nicht vollständigen Parallelogramme entweder teilweise offene Aussparungen sein, oder geschlossene (dies ist beispielsweise auch durch die Figuren 1 bis 4 illustriert).

Bei dem Reaktor der vorliegenden Erfindung wird der Reaktionsraum von der Vorderseite des Reaktors flächig angeströmt, wobei das anströmende Fluid in die nicht komplett mit Stegen umgebenen Aussparungen strömt.

Die Deck- und Strukturlagen bestehen aus gut wärmeleitfähigem Material, bevorzugt Material mit einer Wärmeleitfähigkeit von 10 bis 400 W/(mK). Bevorzugt ist das Material ein schweißbares Material, besonders bevorzugt ausgewählt aus der Gruppe bestehend aus Nickelbasislegierung(en), Aluminium (Wärmeleitfähigkeit von etwa 300 W/(mK)), Aluminiumlegierung(en), Kupfer (Wärmeleitfähigkeit von etwa 400 W/(mK)), Edelstahl, Hochtemperaturlegierungen wie insbesondere 1.4876 oder 2.6433 oder Mischungen davon, insbesondere Edelstahl. In einer Variante der vorliegenden Erfindung werden Materialien ausgewühlt, die eine Wärmeleitfähigkeit von 12 bis 25 W/(mK) aufweisen.

Die Kontaktpunkte und Flächen der Stege der übereinanderliegenden Strukturlagen sind miteinander vollständig verbunden, insbesondere verschweißt. Diese Verbindungen sind fluiddicht.

In den Aussparungen zwischen den Stegen der Strukturlagen kann Katalysatorschüttung angeordnet sein, in bevorzugten Varianten ist in den Aussparungen zwischen den Stegen der Strukturlagen Katalysatorschüttung angeordnet. Die Katalysatorschüttung kann dabei auf verschiedene Art und Weise immobilisiert sein bzw. zurückgehalten werden, zum Beispiel durch Rückhaltevorrichtungen oder durch Verkleben.

Die Überdeckung der Aussparungen von einer Lage durch die Stege der darüber liegenden Lage beträgt 30-60%, bevorzugt 30 bis 55%.

In bevorzugten Ausgestaltungen der vorliegenden Erfindung weist der Reaktor bestimmte Dimensionen auf.

In diesen Ausgestaltungen haben die Strukturlagen jeweils eine Dicke von 0,3 mm bis 2 mm, bevorzugt 0,5 mm bis 1 mm, die Stege eine Breite von 0,5 mm bis 4 mm, bevorzugt von 1 mm bis 3 mm, und die größte Seitenlänge der Aussparungen beträgt zwischen 2 mm und 20 mm, bevorzugt zwischen 4 mm und 12 mm.

Die Decklagen weisen Dicken im gleichen Rahmen wie die Strukturlagen auf, also von 0,3 mm bis 2 mm, bevorzugt 0,5 mm bis 1 mm; die jeweils eingesetzten Dicken sind aber von denen der Strukturlagen unabhängig. In einigen Ausführungsformen werden Deck- und Strukturlagen aus dem gleichen Rohmaterial (z.B. Blech oder Metallfolie) gefertigt und haben dann die gleiche Dicke. In anderen Ausführungsformen werden die Dicken der Decklagen von denen der Strukturlagen in Abhängigkeit von der gewünschten Wärmeableitung abweichend, oder auch zur zusätzlichen mechanischen Stabilisierung (dann dicker als die Strukturlagen), ausgewählt.

Dabei ist es auch wichtig, dass die Aussparungen mindestens um den Faktor 2, bevorzugt mindestens um den Faktor 3, breiter sind als die die Stegbreite. Unterhalb des Faktors 2 wird der Raum, durch den eine Katalysatorschüttung eingefüllt und Reaktionsmedium strömen kann, allmählich zu gering; bei einem Faktor von 1, also wenn die Stege genauso breit sind wie die Aussparungen, ist gar kein Raum zum durchströmen mehr vorhanden. Andererseits sollte der Faktor auch nicht zu groß werden, damit eine ausreichende Wärmeabführung der Reaktionswärme über die Stege noch möglich ist. In besonderen Ausführungen liegt diese Obergrenze des Faktors bei maximal 6, bevorzugt bei maximal 5. Insbesondere liegt der Faktor zwischen 3 und 6.

Bei einer Raute oder einem Quadrat als Spezialfall eines Parallelogramms ist die größte Kantenlänge naturgemäß gleich der anderen Kantenlänge.

Bei dieser, sowie allen weiteren Dimensionsangaben für die vorliegende Erfindung versteht es sich für den Fachmann, dass fertigungsbedingte Toleranzen umfasst sind; diese können, wie dem Fachmann bewusst ist, je nach Fertigungstechnik voneinander abweichen (beispielsweise hat ein Stanzverfahren in der Regel andere Toleranzen als ein Laserschneideverfahren, ein Verfahren zur additiven Fertigung oder ein Wasserstrahlverfahren).

In einigen Ausführungsformen der vorliegenden Erfindung können diese Strukturdimensionen bei aufeinanderfolgenden Lagen voneinander abweichen. Für diesen Fall ist es aber wesentlich, dass ein ausreichender Platz zur Befüllung bzw. Durchströmung, wie sinngemäß im vorhergehenden Absatz beschrieben, verbleibt. Aus produktionstechnischen Gründen und damit möglichst gleichmäßige Ergebnisse erzielt werden, werden jedoch in der Regel Strukturlagen übereinandergeschichtet, die gleiche Dimensionen der Strukturen aufweisen.

In weiteren bevorzugten Ausgestaltungen der vorliegenden Erfindung weist der Reaktor ein für alle Strukturlagen gemitteltes oder, bevorzugt, für jede einzelne Strukturlage immer das gleiche, Verhältnis von Stegbreite zu längster Seitenlänge der Aussparungen zwischen 0,15 und 0,55, bevorzugt zwischen 0,25 und 0,45, auf. Wenn das Verhältnis zu gering wird, wird das Limit für eine technisch vernünftige Schweißbarkeit der Lagen unterschritten. Wenn das Verhältnis zu groß wird, wird andererseits das sinnvolle Limit für Katalysatorschüttung überschritten. Denn wenn in Relation zu viel Katalysator vorliegt, ist der Wärmeabtransport über die Stege der einzelnen Strukturlagen gegebenenfalls nicht mehr in ausreichendem Maße möglich. Zu berücksichtigen ist in diesem Zusammenhang jedoch, das für additive Fertigungsverfahren, also insbesondere 3D-Druck, die untere Grenze verschoben sein kann. Dennoch sind auch in diesem Falle die oben genannten Grenzen bevorzugt.

In weiteren bevorzugten Ausgestaltungen der vorliegenden Erfindung weist der Reaktor einen Leervolumenanteil von 45 Vol.% bis 75 Vol.%, bevorzugt 50 Vol.% bis 70 Vol.%, besonders bevorzugt 60 Vol.% bis 70 Vol.%, auf. Zwar ist der Reaktor der vorliegenden Erfindung nicht auf einen Betrieb mit einer Füllung aus Katalysatorschüttung beschränkt, jedoch ist er für einen solchen Betrieb besonders gut geeignet und primär ausgelegt. In diesen genannten Bereichen hat sich der Reaktor als besonders gut geeignet erwiesen.

Insofern ist das Leervolumen zum Betrieb durch eine Schüttung feiner Katalysatorpartikel, die bevorzugt sphärisch sind, gefüllt. Dies ist mithin eine besonders bevorzugte Ausgestaltung der vorliegenden Erfindung.

In diesem Zusammenhang sei darauf hingewiesen, dass der Aspekt der Nutzung des Holraumes für die Füllung mit Katalysator ein wesentliches Merkmal der vorliegenden Erfindung ist. Dabei ist es wichtig, eine bestimmte Menge an Katalysator pro Volumen integrieren zu können und gleichzeitig die Wärme effizient abführen zu können.

In weiteren bevorzugten Ausgestaltungen der vorliegenden Erfindung wird ein Aussparungsmaß von 6 mm und eine Stegbreite von 1.5 mm bei quadratischen Aussparungen ausgestaltet. Damit wird ein Leervolumenanteil von 64% erhalten. Die Einhaltung gewisser Grenzen der Stegbreiten ist besonders vorteilhaft, damit das Verhältnis zwischen freigesetzter Wärme und Wärmeabfuhrvermögen der Struktur sich nicht drastisch ändert. Der erfindungsgemäße Reaktor kann beispielsweise für Methanolsynthese, FT-Synthese oder Methanisierung verwendet werden, also Reaktionen, die unter intensivierten Bedingungen der Mikrostrukturierung eine volumetrische Energiefreisetzung von mindestens 3 kW/L (minimal 2 kW/L) im Reaktionsvolumen besitzen können. Diese Energie muss demnach über die Stege und die Knotenpunkte abgeführt werden. Dies ist mit den erfindungsgemäß bevorzugten Stegmaßen möglich. Die auf das Gesamtvolumen (also das inklusive der Stege okkupierte Volumen) freigesetzte Energie sollte für einen hohen Prozessintensivierungsgrad bevorzugt größer als 1 kW/L sein, daher ist ein Leerraumanteil von mindestens 50% in einigen Ausführungsformen bevorzugt. Ein Leeraumanteil von größer als 70% ist ebenfalls nicht sinnvoll, da dann die Wärmeabfuhr über die Knotenpunkte (Kontaktpunkte) nicht garantiert ist.

Die Größe der einzelnen Reaktoren kann in weiten Grenzen variiert werden. Bevorzugte Ausführungsformen der vorliegenden Erfindung umfassen Reaktorgrößen mit Längen (Strömungsrichtung) zwischen 5 cm und 200 cm, bevorzugt zwischen 20 cm und 50 cm. Bei darüber liegenden Längen nimmt die Durchströmbarkeit des Partikelhaufwerkes innerhalb des Reaktors immer mehr ab und erreicht schließlich nicht mehr praktikable Werte. Die Breite der erfindungsgemäßen Reaktoren liegt in bevorzugten Ausführungsformen zwischen 5 cm und 150 cm, bevorzugt zwischen 30 cm und 80 cm. Die Höhe der erfindungsgemäßen Reaktoren ergibt sich aus einer Addition der Dicken der Strukturlagen und der Deckklagen, sowie gegebenenfalls vorhandener Zwischenlagen und liegt in bevorzugten Ausführungsformen zwischen 3 mm bis 2 cm. Ausführungsformen können zum Beispiel Höhen von 5,2 mm oder 5,4 mm oder 8,4 mm oder 9,8 mm haben.

Die in der Praxis verwendeten Dimensionen hängen auch vom Kühlungsbedarf und den gegebenenfalls eingesetzten Wärmetauscherelementen (und deren Effektivität) ab.

Zum sicheren Rückhalt der Katalysatorpartikel kann in einigen bevorzugten Ausführungsfirmen der vorliegenden Erfindung an Vorder- und Rückseite des Reaktors eine Rückhalteeinrichtung für die Katalysatorpartikel angeordnet sein, bevorzugt netzartige Bauteilen oder feinporige Metall- oder Keramikbauteile, insbesondere feinmaschige Drahtnetze. Wesentlich für die jeweils eingesetzte Katalysatorrückhalteeinrichtung ist, dass diese aus einem Material besteht, dass für die im Reaktor ablaufende chemische Reaktion nicht katalytisch wirksam und gegenüber den Edukten und Produkten inert ist. Die Maschenweite oder Porengröße der Katalysatorrückhalteeinrichtung ergibt sich aus der Größe der eingesetzten Katalysatorpartikel und wird so ausgewählt, dass diese zurückgehalten werden und die Maschen bzw. Poren nicht verstopfen. Solche Rückhalteeinrichtungen sind dem Fachmann im Prinzip bekannt.

In weiteren bevorzugten Ausgestaltungen der vorliegenden Erfindung werden in dem Reaktor 2 bis 10 Strukturlagen, und insbesondere für maximal 15K, bevorzugt maximal 5K, Temperaturhub, zwischen 2 und 7, bevorzugt zwischen 3 und 6, Strukturlagen zwischen den Decklagen angeordnet. Dadurch sind besonders gute Leistungsprofile im Hinblick auf den Wärme(ab)transport erzielbar.

Es ist dabei festzuhalten, dass die Reaktoren der vorliegenden Erfindung keine Rechteckkanäle und/oder keinen Hauptkanal umfassen. Die Strukturen der vorliegenden Erfindung erlauben solche Kanalstrukturen nicht. Zudem sind dies Geometrien, die schlechtere Ergebnisse bedingen.

In weiteren bevorzugten Ausgestaltungen der vorliegenden Erfindung sind die Stege und/oder Wände nicht mit Katalysator beschichtet.

Die Vorder- und Rückseite des Reaktors sind zum Zufluss bzw. Abfluss von Reaktionsmedium konfiguriert.

In weiteren bevorzugten Ausgestaltungen der vorliegenden Erfindung weisen die Strukturlagen an den Vorder- und Rückseiten des Reaktors zusätzlich einen Rand oder mehrere Ränder mit eingearbeiteten Kanälen zur Verteilung des Reaktionsmediums bei Zu- und Abfluss auf.

Genauso gut ist es möglich, und in anderen Ausführungsformen der vorliegenden Erfindung bevorzugt, dass die Strukturlagen an den Vorder- und Rückseiten des Reaktors keine solchen Ränder vorliegen.

Unabhängig davon ist es vorteilhaft und mithin in Ausführungsformen der vorliegenden Erfindung bevorzugt, wenn an den Vorder- und Rückseiten des Reaktors geeignete Verteilerhutzen oder Verteilerräume für das Reaktionsmedium angeordnet sind, so das eine gleichmäßige Zufuhr bzw. Abfuhr von Reaktionsmedium in den/aus dem Reaktor gewährleistet ist. Solche sind dem Fachmann hinlänglich bekannt.

Die äußeren Decklagen der erfindungsgemäßen Reaktoren können in einzelnen Ausführungsformen der vorliegenden Erfindung an ihren Außenseiten Rippen aufweisen, die dann als Kühlerstruktur in das umgebenden Medium ragen.

Das für die vorliegende Erfindung wesentliche Merkmal, dass die Überdeckung der Aussparungen von einer Lage durch die Stege der darüber liegenden Lage 30-60%, bevorzugt 30 bis 55%, betragen bezieht sich dabei selbstverständlich nur auf die Strukturlagen.

In weiteren bevorzugten Ausgestaltungen der vorliegenden Erfindung sind die Stege an den Punkten, an denen sie mit denjenigen der darunter bzw. darüber liegenden Strukturlagen in Kontakt stehen, verbreitert ausgeführt. Bevorzugt sind (aufgrund der Symmetrie) kreisförmige Verbreiterungen. Bevorzugt ist jeweils eine Verbreiterung in der Mitte jedes Steges angeordnet, insbesondere wenn der Versatz der Lagen 0,5 in x- und y-Richtung, wie oben definiert, beträgt. Die Verbreiterung bewirkt dabei maximal eine Verdopplung, bevorzugt eine 40 bis 60%ige, insbesondere 50%ige, Verbreiterung der Stegbreite. Es ist aber ebenfalls möglich mehr als eine Verbreiterung pro Steg vorzusehen und ebenfalls von der mittigen Positionierung abzuweichen; bei mehreren Verbreiterungen ist es bevorzugt, diese gleichmäßig über den jeweiligen Steg verteilt anzuordnen.

Wichtig ist dabei jedoch die Verbreiterungen nicht zu groß werden zulassen, damit eine Katalysatorbefüllung und ein ausreichender Fluiddurchfluss gewährleistet bleiben.

In weiteren bevorzugten Ausgestaltungen der vorliegenden Erfindung wird der Reaktor gemäß vorliegende Erfindung durch additive Herstellungsverfahren, insbesondere 3D-Druck, oder übereinanderlegen und anschließendes Verschweißen der einzelnen Lagen hergestellt. Dabei ist für den Fall des Verschweißens der Lagen bevorzugt, dass dieses mittels Laserschweißen, Elektronenstrahlschweißen oder Diffusionsschweißen erfolgt. In manchen Ausführungsformen ist das Diffusionsschweißen besonders bevorzugt, weil dann einfach mehrere Lagen inklusive der Decklagen in einem Schritt aufeinandergestapelt miteinander verschweißt werden können.

In weiteren bevorzugten Ausgestaltungen der vorliegenden Erfindung umfasst der erfindungsgemäße Reaktor neben den Decklagen und den Strukturlagen noch Zwischenlagen, die zwischen Strukturlagen angeordnet sind, mit der Maßgabe, dass auf jeder Seite einer Zwischenlage mindestens zwei Strukturlagen angeordnet sind, bevor eine weitere Zwischenlage oder eine Decklage angeordnet wird.

Diese Zwischenlagen sind bevorzugt unstrukturierte Lagen, die - abgesehen von der Anordnung innerhalb der Reaktorlagenstruktur den Decklagen entsprechen.

Diese Ausgestaltungen können im Prinzip als eine direkte Übereinanderanordnung mehrerer erfindungsgemäßer Reaktoren aufgefasst werden, wobei sich die jeweils aneinandergrenzenden Reaktoren eine Decklage teilen. Dies kann unter fertigungstechnischen Aspekten manchmal vorteilhaft sein, bedingt aber, dass die resultierende Anordnung nicht flexibel auseinandergenommen werden kann, wie erfindungsgemäße Ausgestaltungen, bei denen mehrere vollständige erfindungsgemäße Reaktoren übereinander angeordnet werden, die sich keine Decklagen teilen.

Die nutzbaren Dimensionen der Zwischenlagen, insbesondere deren Dicken, entsprechen den Dimensionen der Decklagen, werden jedoch unabhängig voneinander gewählt. Das bedeutet, dass Länge und Breite auf die entsprechenden Dimensionen von Struktur- und Decklagen des Reaktors angepasst werden müssen, jedoch kann die Dicke von den Dicken der Strukturlagen oder denen der Decklagen abweichen. Es ist zudem möglich, dass die Zwischenlage strukturiert sind, wobei deren Struktur von denen der Strukturlagen abweicht. Dies ist erfindungsgemäß jedoch weniger bevorzugt und wird insbesondere nicht umgesetzt.

Beispiele für bestimmte Ausführungsformen betreffend erfindungsgemäße Mehrfachreaktoranordnungen weisen folgende Abfolgen der unterschiedlichen Bauelemente übereinander auf:
- DPD;
- DPPD;
- DPPPD;
- DPPPPD;
- DPZPD;
- DPZPZPD;
- DPZPZPZPD;
- DPZPZPZPZPD
- DPZPZPZPZPZPD.

Dabei bedeutet D = Decklage, Z = Zwischenlage und P = ein Paar Strukturlagen. Selbstverständlich müssen die Zwischenlagen nicht symmetrisch von Strukturlagen umgeben sein (dies ist lediglich teilweise einfacher zu fertigen), sondern können auch unsymmetrisch verteilt sein, wie z.B.:
- DPZPPD;
- DPPZPPPD;
- DPPZPZPPPD:

Diese Reaktoren sind lediglich beispielhaft und die vorliegende Erfindung ist keineswegs auf diese beschränkt; es können erfindungsgemäß noch sehr viel mehr Lagen übereinander angeordnet werden.

Die erfindungsgemäßen Reaktoren können einfach zu Mehrfachreaktoranordnungen angeordnet werden, indem sie über- und/oder nebeneinander angeordnet werden, optional aber bevorzugt mit jeweils dazwischen angeordneten Wärmetauscherelementen.

Weiterhin ist Gegenstand der vorliegenden Erfindung eine Mehrfachreaktoranordnung umfassend mehrere Reaktoren gemäß der vorliegenden Erfindung. Hierbei wird eine Mehrzahl an erfindungsgemäßen Reaktoren gestapelt, wobei zwischen den einzelnen Reaktoren jeweils Wärmetauscherelemente angeordnet sind.

Diese Wärmetauscherelemente können verschiedene Ausgestaltungen annehmen, abhängig von der in den Reaktoren durchgeführten Reaktion und der abzuführenden Wärmemenge, bzw. der zuzuführenden Kältemenge.

Insofern ist es auch möglich, dass die Wärmetauscherelemente im Wesentlichen nur einen Raum bilden oder der umgebende Raum als Wärmetauscherelement fungiert, und das Wärmetauschermedium nur Umgebungsluft (bzw. Umgebungsatmosphäre) ist. Bevorzugt ist es jedoch, wenn dedizierte Wärmetauscherelemente verwendet werden, die mittels Durchleitung eines Wärmetauschermediums Wärme oder Kälte zuführen oder abtransportieren.

In manchen Ausführungsformen ist es bevorzugt, Wärmetauscherelemente zu verwenden, welche auf Strukturen basieren, wie sie in der DE 10 2015 111 614 A1 beschrieben sind.

Im Rahmen der erfindungsgemäßen Mehrfachreaktoranordnungen ist es in einigen Ausführungsformen möglich, verschiedene Reaktoren, die in ihrer Bauart von den Reaktoren der vorliegenden Erfindung abweichen, mit erfindungsgemäßen Reaktoren zu kombinieren. Sinnvoll ist es in diesen Ausgestaltungen, wenn die verschiedenen Reaktoren gleiche oder zumindest annähernd gleiche Außenmaße aufweisen. Entsprechend können auch verschiedene oder gleiche Wärmetauscherelemente verwendet werden.

In den meisten Ausführungsformen ist es aber bevorzugt nur erfindungsgemäße Reaktoren und nur eine Art Wärmetauscherelement in den erfindungsgemäßen Mehrfachreaktoranordnungen zu kombinieren; wobei diese insbesondere alle die gleichen äußeren Abmessungen aufweisen.

Die Wärmetauscherelemente können im Rahmen der vorliegenden Erfindung im Gleich-, Quer- oder Gegenstrom zu der Flussrichtung des Reaktionsmediums betrieben werden, abhängig von der genau verwendeten Art der Wärmetauscherelemente und des Wärmetauschbedarfs der in den Reaktoren durchgeführten Reaktion.

Die genaue Anordnung der Reaktoren in solchen erfindungsgemäßen Mehrfachreaktoranordnungen ist auch in weitem Maße variabel. Es ist möglich viele erfindungsgemäße Reaktoren übereinander, nebeneinander oder hintereinander anzuordnen.

Im Rahmen der erfindungsgemäßen Mehrfachreaktoranordnungen ist es in einigen Ausführungsformen möglich, eine schachbrettartige Anordnung auszubilden, wobei sich Reaktoren, bevorzugt erfindungsgemäß Reaktoren, jeweils mit Wärmetauscherelementen abwechseln.

Ebenso ist es möglich mehrere solcher schachbrettartigen Anordnungen zu kombinieren, bevorzugt derart, dass diese übereinander versetzt (um jeweils ein "Feld") angeordnet sind

Die äußeren Dimensionen der erfindungsgemäßen Mehrfachreaktoranordnungen sind prinzipiell nicht begrenzt. So ist es im Rahmen der vorliegenden Erfindung durchaus möglich Mehrfachreaktoranordnungen zu konstruieren, die insgesamt mehrere Meter hoch und breit sind. In bevorzugten Ausgestaltungen der vorliegenden Erfindung ergeben sich Mehrfachreaktoranordnungen mit einer Höhe von bis zu 2 Metern, oder bis zu 2,5 Metern oder bis zu 3 Metern Höhe.

Beispiele für bestimmte Ausführungsformen betreffend erfindungsgemäß Mehrfachreaktoranordnungen weisen folgende Abfolgen der unterschiedlichen Bauelemente übereinander auf:
- DPZPD-W-DPZPZPZPD-W-DPZPZPZPD-W-DPZPZPZPD-W-DPZPZPZPD-W-DPZPD;
- DPZPD-W-DPZPZPZPD-W-DPZPZPZPD-W-DPZPZPZPD-W-DPZPZPZPD-W-DPZPZPZPD-W-DPZPD;
- DPZPZPD-W-DPZPZPZPZPD-W-DPZPZPZPZPD-W-DPZPZPZPZPD-W-DPZPZPZPZPD-W-DPZPZPZPZPD-W-DPZPZPD.

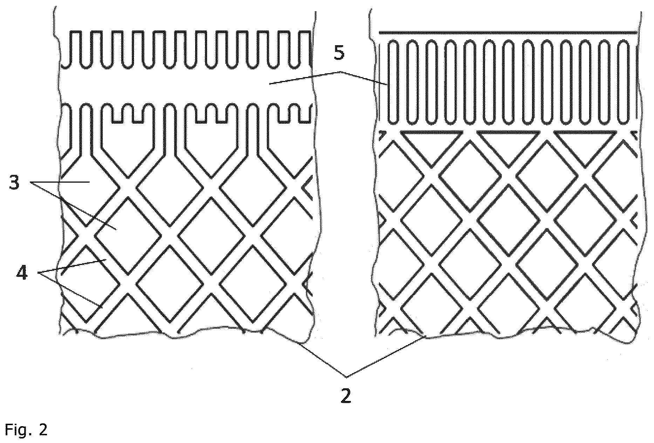

Dabei bedeutet D = Decklage, Z = Zwischenlage, P = ein paar Strukturlagen und W = Wärmetauscherelement, insbesondere ein Kühlfolienpaar gemäß DE 10 2015 111 614 A1 (Figur 2).

Diese Mehrfachreaktoranordnungen sind lediglich beispielhaft und die vorliegende Erfindung ist keineswegs auf diese beschränkt.

Diese Mehrfachreaktoranordnungen können zu mehreren nebeneinander angeordnet werden, oder auch mit anderen Anordnungen daneben kombiniert werden.

Es ist überdies Gegenstand der vorliegenden Erfindung ein Verfahren zur Herstellung eines erfindungsgemäßen Reaktors durch 3D-Druck oder Übereinanderlegen und dann Verschweißen der einzelnen Lagen, bevorzugt mittels Laserschweißen, Elektronenstrahlschweißen oder Diffusionsschweißen.

Dieses erfindungsgemäße Verfahren zeichnet sich in bevorzugten Ausgestaltungen der vorliegenden Erfindung dadurch aus, dass
I) einzelne Strukturlagen gefertigt werden, bevorzugt durch Ausstanzen, Laserschneiden, Wasserstrahlschneiden oder Ausfräsen der Struktur aus einem Materialstück, einem Materialblech oder einer Materialfolie,
IIa1) mehrere Strukturlagen jeweils versetzt zueinander übereinander und zwischen einer oberen Decklage und einer unteren Decklage angeordnet werden, und
IIa2) der entstandene Multilagenstapel mittels Diffusionsschweißen über die jeweiligen Kontaktstellen und Kontaktflächen miteinander verbunden werden,
   oder
IIb1) jeweils eine Strukturlage über eine vorherige Decklage oder Strukturlage angeordnet wird, dann
IIb2) mittels Laserschweißen die Kontaktpunkte und/oder Kontaktflächen miteinander verbunden werden,
IIb3) die Schritte IIb1) und IIb2) entsprechend der gewünschten Anzahl an Strukturlagen wiederholt werden, und
IIb4) eine abschließende Decklage aufgebracht und verschweißt wird,
wobei die einzelnen Lagen so angeordnet werden, dass die Überdeckung der Aussparungen von einer Lage zur nächsten 30-60%, bevorzugt 30 bis 55%, betragen.

In weiteren bevorzugten Ausgestaltungen der vorliegenden Erfindung weisen die einzelnen Strukturlagen bei der Fertigung einen um die Struktur herumlaufenden Rand auf. Dieser kann ich weiteren bevorzugten Ausführungsformen nach der Verschweißung entfernt werden.

In anderen bevorzugten Ausführungsformen wird der Rand nicht entfernt und bildet nach dem Verschweißen die Reaktorwand.

In weiteren bevorzugten Ausgestaltungen der vorliegenden Erfindung werden anschließend an die anderen Schritte in Vorder- und Rückseite der Strukturlagen Öffnungen für die Fluid Zu- und Ableitung gefräst.

In weiteren bevorzugten Ausgestaltungen der vorliegenden Erfindung werden die einzelnen Strukturlagen auf bestimmte genau definierte Außenmaße eingestellt, und dann passgenau in ein leeres Reaktorgehäuse eingesetzt.

Dieser Einsatz kann entweder einzeln für jede Strukturlage nacheinander erfolgen oder en bloc. Die Strukturlagen können entweder vorher zu einem Block verschweißt werden und dann als Block in das Gehäuse eingesetzt werden, oder sie werden zusammen mit Decklagen nach dem Einsatz in das Gehäuse zusammen mit diesem verschweißt.

Sinngemäß entsprechend gilt das erfindungsgemäße Verfahren natürlich auch für den Fall, dass Zwischenlagen angeordnet werden.

Allerdings ist die Abfolge der Schritte dann, logischerweise entsprechend angepasst der Schritt IIb4) wie folgt ersetzt wird:
IIb4a) eine Zwischenlage aufgebracht und verschweißt wird,
IIb4b)die Schritte IIb1) und IIb2) entsprechend der gewünschten nach der Zwischenlage angeordneten Anzahl an Strukturlagen durchgeführt werden,
IIb4c) die Schritte IIb4a) und IIb4b) sooft wiederholt werden, wie Zwischenlagen angeordnet werden sollen, und
IIb4z) eine abschließende Decklage aufgebracht und verschweißt wird.

In weiteren bevorzugten Ausgestaltungen der vorliegenden Erfindung umfasst das Verfahren die Anordnung von Katalysatorrückhalteeinrichtungen, bevorzugt netzartigen Bauteilen oder feinporige Metall- oder Keramikbauteile, insbesondere feinmaschige Drahtnetze, an der Reaktorvorderseite und der Reaktorrückseite. Die Katalysatorrückhalteeinrichtung an der Reaktorvorderseite wird entweder während der Reaktorherstellung angebracht, oder nach Befüllung mit Katalysator.

Es ist im Rahmen der vorliegenden Erfindung möglich, dass das Verfahren den Schritt des Befüllens des Reaktionsraumes mit Katalysatorfüllung vor aufbringen der abschließenden Decklage umfasst.

In anderen, bevorzugten Ausgestaltungen der vorliegenden Erfindung umfasst das Verfahren den Schritt des Befüllens des Reaktionsraumes mit Katalysatorfüllung nach Fertigstellung des Reaktors von der Reaktorvorderseite aus (als Schritt III)). In diesem Fall umfasst der Befüllungsvorgang zweckmäßigerweise die Schritte des Anordnens von Katalysatorrückhalteeinrichtung an der Reaktorrückseite (Schritt IIIa), Kippens des Reaktors auf die Rückseite (Schritt IIIb), so dass die Reaktorvorderseite dann nach oben zeigt, Befüllens des Reaktors mit Katalysatorschüttung durch die Vorderseite (Schritt IIIc), optional unter Rüttelbewegungen oder Ähnlichem, und Anordnung von Katalysatorrückhalteeinrichtung an der Reaktorvorderseite (Schritt IIId)). Bevorzugt wird dabei mindestens eine der Katalysatorrückhalteeinrichtungen derart angeordnet, dass sie zerstörungsfrei entfernbar ist, um den Austausch bzw. die Entfernung des Katalysators zu erleichtern.

Weiterhin können die erfindungsgemäßen Reaktoren im Rahmen des erfindungsgemäßen Verfahrens in weiteren Ausführungsformen noch mit Verteilerhutzen oder Verteilerräumen für das Reaktionsmedium an Vorder- und Rückseite versehen werden (Schritt IV)).

Nicht zuletzt ist Gegenstand der vorliegenden Erfindung die Verwendung der erfindungsgemäßen Reaktoren oder der erfindungsgemäßen Mehrfachreaktoranordnungen oder eines der mit dem erfindungsgemäßen Verfahren hergestellten Reaktoren für exotherme oder endotherme Reaktionen.

Besonders gut geeignet sind die erfindungsgemäßen Reaktoren, Mehrfachreaktoren bzw. mit dem erfindungsgemäß Verfahren hergestellten Reaktoren für exotherme Reaktionen, wie Methanolsynthese oder Methanisierung oder Fischer-Tropsch-Synthesen, insbesondere Fischer-Tropsch-Synthesen.

Insofern betreffen besonders bevorzugte Ausgestaltungen der vorliegenden Erfindung die Verwendung der erfindungsgemäßen Reaktoren oder der erfindungsgemäßen Mehrfachreaktoranordnungen oder eines der mit dem erfindungsgemäßen Verfahren hergestellten Reaktoren für Methanolsynthese oder Methanisierung oder Fischer-Tropsch-Synthesen, insbesondere Fischer-Tropsch-Synthesen.

Die vorliegende Erfindung betrifft also insbesondere auch geschweißte Multilagenstrukturen zur Fluid-Redispergierung und Wärmeleitung in Katalysatorschüttungen, wie dies auch weiter oben und nachfolgend dargestellt ist.

Die vorliegende Erfindung beruht darauf, dass die entwickelte und an ein Netz erinnernde Struktur sich in Ihrer Gestalt für mehrere Fügeverfahren und additive Fertigungsverfahren eignet.

Die erfindungsgemäßen Reaktoren weisen (vgl. auch Figur 1) beim Apparatebau viele durchgehenden Kontaktpunkte, die senkrecht zur Strömungsrichtung durch den Plattenstapel verbunden werden können, wahlweise durch so genanntes Diffusionsschweißen als auch durch Strahlverfahren, wie bevorzugt Laserschweißen oder Elektronenstrahlschweißen.

Die vorliegende Erfindung beruht demgemäß auch darauf, dass sich die Strömung durch den Reaktor gleichmäßig durch wiederkehrende Strukturen, die regelmäßig überlappend angeordnet sind und je eine Aussparung in einer Strukturlage (Platte) jeweils vier darunter und darüber liegende Aussparungen verbindet, verteilt (vgl. auch Figur 2). Durch diese Anordnung ergibt sich in beiden Raumrichtungen senkrecht zur Strömungsrichtung eine wiederkehrende Durchmischung und Strömungsunterbrechung, die zu einem Ausgleich von Porositätsunterschieden in der Katalysatorschüttung sowie zwischen wandnaher Partikel und Partikel-Partikel-Verbünden führt. Dies wiederum erzielt eine einheitliche Verweilzeit einzelner Strömungspfade durch den Reaktor. Somit wird die Notwendigkeit hohen Aufwand zur Vergleichmäßigung der lokalen Partikelschüttdichte betreiben zu müssen, vermieden.

Bei der vorliegenden Erfindung sind die einzelnen Aussparungen groß genug, um Partikel, insbesondere Katalysatorpartikel/Katalysatorschüttung, mit dem Durchmesser der Größe von 50-300 µm leicht aufnehmen zu können. Gleichzeitig erlaubt die Anordnung die Durchdringung der Struktur mit Ultraschall (bei Füllung mit Flüssigkeiten) durch den gesamten Reaktor um den Reaktor von Rückständen der Partikel zu befreien. Dies bedingt eine erhebliche Erleichterung der Reinigung des Reaktors. Unter anderem ist es dadurch möglich, dass ein und derselbe Reaktor nach Reinigung und Neubefüllung mit einem anderen Katalysator für eine vollständig andere Reaktion eingesetzt werden kann.

Im Rahmen der vorliegenden Erfindung erfolgt demgemäß keine vollständige Ausgießung der Hohlräume mit (flüssigem) Katalysator, sondern eine Füllung mit Katalysatorschüttung, wobei die einzelnen Katalysatorpartikel bevorzugt eine Teilchengrößenverteilung von 50 µm bis 500 µm, bevorzugt 50 µm bis 300 µm gemessen per Laserbeugung, aufweisen.

Ein Beispiel für Katalysatoren, die in erfindungsgemäßen Reaktoren bei Methanol-Synthesen in bevorzugten Ausgestaltungen eingesetzt werden können, sind Cu/ZnO/Al₂O₃-Katalysatoren mit einer Teilchengrößenverteilung von 200 µm bis 400 µm, gemessen per Laserbeugung.

Ein Beispiel für Katalysatoren, die in erfindungsgemäßen Reaktoren bei Fischer-Tropsch-Synthesen in bevorzugten Ausgestaltungen eingesetzt werden können, sind auf Kobalt basierende Katalysatoren mit einer Teilchengrößenverteilung von 50 µm bis 200 µm, gemessen per Laserbeugung.

Weiterhin erlauben im Rahmen der vorliegenden Erfindung die sich kreuzenden Verbindungsstege kurze Wege der Wärmleitung durch geordnete, regelmäßige Verbindung zur Kühlpassage. Zudem ist durch das Verbindungsverfahren (Herstellungsverfahren) eine stoffschlüssige Verbindung zur Kühlpassage gegeben, d.h. eine Vermischung von Reaktionsmedium mit Wärmetauschermedium ist ausgeschlossen. Egal welches Verbindungsverfahren (Herstellungsverfahren) im Rahmen der vorliegenden Erfindung letztlich angewendet wird, existieren keine Kontaktwiderstände durch die stoffschlüssige Verbindung. Über die versetzte Anordnung der Aussparungen und der Verbindung einer Aussparung mit je vier Aussparungen in der darüber liegenden Ebene (Strukturlage) sowie nochmal mit vier Aussparungen in der darunterliegenden Ebene (Strukturlage) durchzieht das vorzugsweise gut leitfähige Konstruktionsmaterial den Katalysatorbereich. Die Abstände zu den Kontaktpunkten sind symmetrisch angeordnet und minimal in der Länge. So ergeben sich kurze Wärmetransportwege aus dem schlecht wärmeleitfähigen Katalysatorhaufwerk an das wärmeleitende Konstruktionsmaterial und auch kurze Transportwege im Konstruktionsmaterial.

In einigen Ausführungsformen der vorliegenden Erfindung kann somit über die Dicke der Platten und die Aussparungsgröße leicht der Wärmetransportweg sowie das Verhältnis von Wärmetransportweg zu Partikelgröße angepasst werden. Beide Parameter sind essentiell abhängig von dem lokalen Wärmefreisetzungspotential der Reaktion und der verwendeten Partikelgröße.

Ein Vorteil der vorliegenden Erfindung liegt darin, dass sie sich für mehrere Schweißverfahren unter Berücksichtigung der Katalysatorintegration und -entfernung sowie der Isothermie im Reaktor eignet.

Vorteilhaft ist weiterhin, dass die Geometrie der Aussparungen in ihrer Größe anpassbar ist und gemeinsam mit der Wahl der jeweiligen Strukturlagendicke kann die Anzahl der Wärmeleitungsstege pro Volumen sowie die Breite zur Befüllung mit unterschiedlich großen Mikropartikeln variabel eingestellt werden. Somit kann auch die volumenbezogene Energiefreisetzung kontrolliert und die Anzahl der im System eingebrachten Kühlebenen minimiert bzw. das Katalysatorvolumen pro Reaktorvolumen maximiert werden.

Vorteilhaft sind insbesondere die vereinfachte Füllung und Entleerung mit Katalysator, die hohe Wärmeabfuhr bei gleichzeitig maximaler Volumenausnutzung mit Katalysator, ein deutlich verbessertes Verweilzeitverhalten (engere Verweilzeitverteilung -> Pfropfenstromverhalten trotz lokaler Porositätsunterschiede in der Partikelschüttung).

Ebenso ist es wirtschaftlich und fertigungstechnisch gesehen von Vorteil, dass vereinfachte Fertigungsverfahren und mithin erhebliche Senkung der Kosten und damit Konkurrenzfähigkeit der Reaktortechnologie gegenüber dem Standard multitubulärer Rohrreaktoren möglich ist.

Die Aussparungen in den Strukturlagen der vorliegenden Erfindung können in einigen der Varianten einfach aus Materialfolien durch kostengünstige Fertigungsverfahren wie z.B. Stanzen, Laserschneiden, Wasserstrahlschneiden, herausgearbeitet werden. Weiterhin ist die Möglichkeit der Herstellung mittels Laserschweißen o.ä. vorteilhaft, das diese beispielsweise im Vergleich zu Diffusionsschweißen einfacher automatisierbar ist, und dadurch eine erhebliche Steigerung der Stückzahl/Jahr möglich wird. Ähnliches gilt für die Herstellung der erfindungsgemäß Reaktoren mittels additiver Fertigungsprozesse (3D-Druck), da dies in hohem Maße automatisierbar ist. Da aber die Herstellung mittels Diffusionsschweißen ebenfalls weiterhin möglich ist, ist die vorliegende Erfindung in hohem Maße variabel, was ein weiterer Vorteil ist.

Der Fachmann kann die genaue Ausgestaltung der beschriebenen Vorrichtungen, sofern diese in dieser Beschreibung nicht explizit beschrieben sind, wie beispielsweise Größe, Wanddicken, Materialien etc. auf die für eine bestimmte Reaktion avisierten Reaktionsbedingungen im Rahmen seines allgemeinen Fachwissens vornehmen.

Sofern bei der Beschreibung der erfindungsgemäßen Vorrichtungen Teile oder die ganze Vorrichtung als "bestehend" aus gekennzeichnet sind, ist darunter zu verstehen, dass sich dies auf die genannten wesentlichen Bestandteile bezieht. Selbstverständliche oder inhärente Teile wie Leitungen, Ventile, Schrauben, Gehäuse, Messeinrichtungen, Vorratsbehälter für Edukte/Produkte etc. sind dadurch nicht ausgeschlossen.

Die einzelnen Teile der Vorrichtungen stehen dabei, soweit nicht explizit beschrieben, in fachüblicher und bekannter Art und Weise miteinander in Wirkverbindung.

Die verschiedenen Ausgestaltungen der vorliegenden Erfindung, z.B. - aber nicht ausschließlich - diejenigen der verschiedenen abhängigen Ansprüche, können dabei in beliebiger Art und Weise miteinander kombiniert werden, sofern solche Kombinationen sich nicht widersprechen.

### Figurenbeschreibung:

Die vorliegende Erfindung wird im Folgenden mit Bezugnahme auf die Zeichnungen näher erläutert. Die Zeichnungen sind dabei nicht limitierend auszulegen und nicht maßstabsgetreu. Die Zeichnungen sind schematisch und enthalten weiterhin nicht alle Merkmale, die übliche Vorrichtungen aufweisen, sondern sind auf die für die vorliegende Erfindung und ihr Verständnis wesentlichen Merkmale reduziert, beispielsweise sind Schrauben, Anschlüsse etc. nicht oder nicht im Detail dargestellt. Gleiche Bezugszeichen zeigen in den Figuren, der Beschreibung und den Ansprüchen gleiche Merkmale.

Figur 1 zeigt eine Schnittansicht eines erfindungsgemäßen Reaktors 1. Die Decklagen sind dabei zur Verdeutlichung nicht gezeigt. In dieser Figur sind vier übereinander angeordnete Strukturlagen **2** dargestellt. Man sieht dabei deutlich die Struktur bestehend aus Stegen **4** und Aussparungen **3.** Die Aussparungen **3** sind in dem Beispiel dieser Figur quadratisch. Ferner ist rechts unten ein Rand **5** illustriert. In dieser Darstellung wird der Reaktor von schräg links unten (= der Vorderseite) mit Reaktionsfluid angeströmt; dies ist in dieser Figur durch die Pfeile angedeutet. Illustriert sind zudem zwei Kontaktpunkt **6,** d.h. Punkte, an denen alle Strukturlagen übereinander in Kontakt stehen bzw. mit anderen Worten Punkte die senkrecht zur Strömungsrichtung durch alle Strukturlagen **2** (und Decklagen) hindurch verbunden werden (selbstverständlich sind mehr Kontaktpunkte pro Strukturlage vorhanden, der Übersichtlichkeit halber hier aber nur zwei dargestellt). An diesen Punkten werden die Lagen miteinander verbunden, beispielsweise mittels Laserschweißen, Elektronenstrahlschweißen oder durch Diffusionsschweißen; wird der Reaktor mittels 3D-Druck hergestellt, erfolgt an dieser Stelle ein kontinuierlicher Aufbau der Struktur in vertikaler Richtung während des Druckens. Über die Kontaktpunkte **6** wird die Wärme (oder Kälte) dann zu den nicht gezeigten Decklagen geleitet, von die Wärme (oder Kälte) dann wiederum an ein anderes Medium, üblicherweise ein Wärmetauschermedium, abgegeben wird. In den Aussparungen **3** können Katalysatorpartikel angeordnet werden (nicht gezeigt). Man sieht in dieser Figur auch deutlich den Versatz der einzelnen Strukturlagen gegeneinander, der hier jeweils 0,5 Längeneinheiten (eine Längeneinheit gleich Länge der Seitenkante einer Aussparung) in x- und y-Richtung beträgt (x-Richtung gleich Richtung einer Seitenkante einer Aussparung und y-Richtung orthogonal in der Ebene der Strukturlage **2**). Die Strömung bzw. Flussrichtung **A des** Reaktionsfluids ist, wie gesagt, durch die Pfeile illustriert. Das Fluid fließt dabei an der Vorderseite zunächst in die offenen Aussparungen, die in diesem Beispiel dreieckig sind (halbe bzw. viertel Quadrate). Wenn das Fluid dann auf Stege trifft, wird es nach oben und/oder unten in Aussparungen **3** der darüber- oder darunterliegenden Strukturlage **2** umgeleitet. Aufgrund der besonderen Struktur wird eine sehr gleichmäßige Durchströmung des gesamten Reaktionsraumes (also der Summe aller Aussparungen) erreicht, sogar am Rand **5** des Reaktors **1.** Dies ist durch die Pfeile angedeutet.

Figur 2 zeigt ausschnittsweise ein Folienpaar **2** mit schlitzförmigen versetzten Schlitzen im Rand **5,** die übereinandergelegt einen durchgehenden Kanal bilden. Die Folien **2** sind dabei aus einer Materialfolie herausgearbeitete Strukturen und repräsentieren mithin - nachdem sie übereinander angeordnet sind, im fertigen Reaktor - jeweils eine erfindungsgemäße Strukturlage **2.**

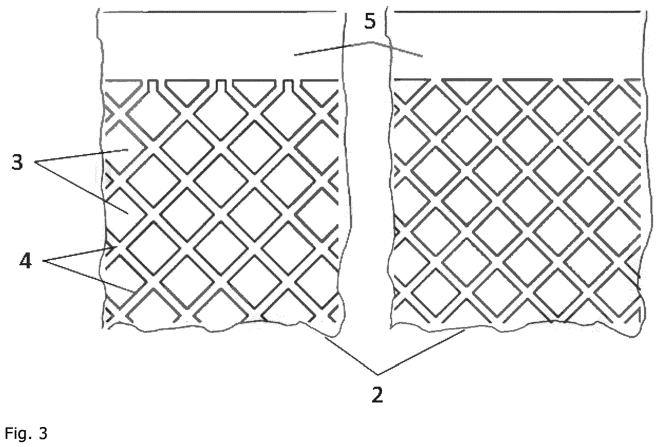

Figur 3 zeigt ausschnittsweise ein Folienpaar **2** mit unstrukturiertem Randbereich **5.** Nach dem Übereinanderanordnen und Zusammenfügen der Folien **2,** beispielsweise mittels Laserschweißen oder einem Diffusionsschweißprozess, kann der Randbereich **5,** beispielsweise durch Fräsung in Strömungsrichtung, entfernt werden. Die Folien **2** sind dabei, wie in Figur 3 auch, aus einer Materialfolie herausgearbeitete Strukturen und repräsentieren mithin - nachdem sie übereinander angeordnet sind, im fertigen Reaktor - jeweils eine erfindungsgemäße Strukturlage **2.**

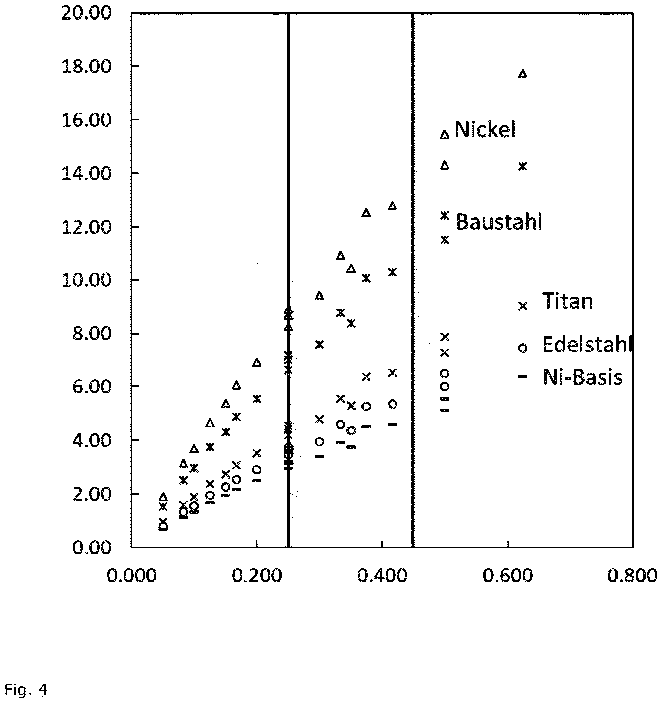

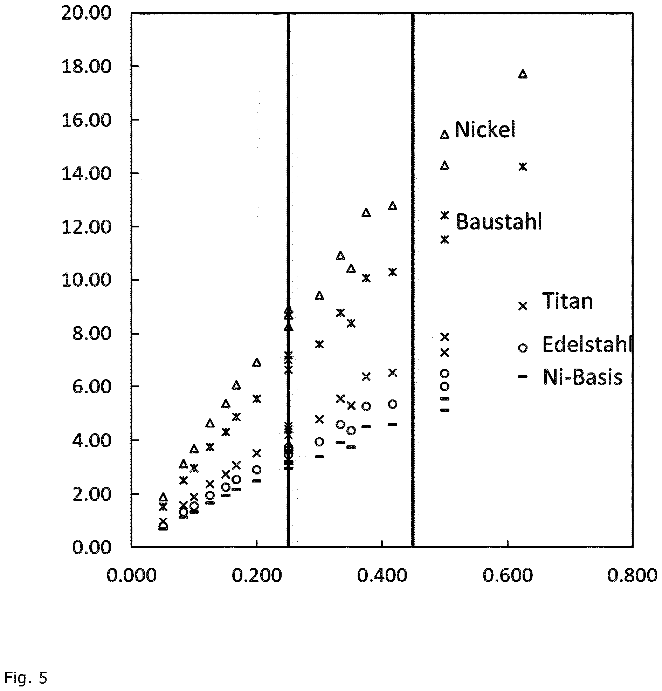

Die Figuren 4 und 5 zeigen für die Fischer-Tropsch Synthese (Figur 4) bzw. für die Methanolsynthese (Figur 5) und verschiedene Materialien eine Auftragung des Verhältnisses von Stegbreite zu Seitenlänge der Aussparung auf der x-Achse (horizontale Achse) gegen die erlaubte Stapelhöhe zwischen Kühlebenen in mm bei 5K Temperaturhub auf der y-Achse (vertikale Achse). Die linke senkrechte Linie gibt dabei jeweils das Limit der Schweißbarkeit an, die rechte senkrechte Linie jeweils das Limit der Katalysatorfüllung. In den Figuren 4 und 5 steht bei den Symbolen der Messwerte jeweils das "Dreieck" für Nickel als Material, das "senkrecht durchgestrichene x" für Baustahl, das "x" für Titan, der "Kreis" für Edelstahl und der "Bindestrich" für ein Material auf Ni-Basis. Aus diesen Beispielen ergeben sich damit ein ideales Verhältnis von Stegbreite zu Seitenlänge der Aussparung zwischen 0,25 und 0,45.

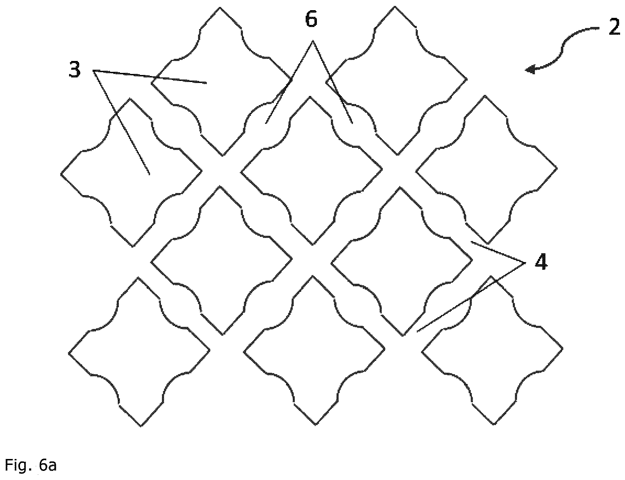

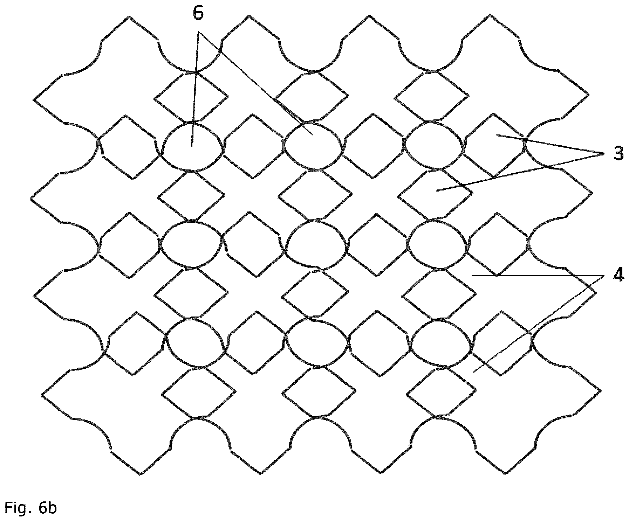

Figur 6 zeigt alternative Ausführungsformen der erfindungsgemäß bevorzugten Rautenstruktur in Draufsicht. Figur 6a zeigt dabei eine einzelne Strukturlage 2 und Figur 6b die Ansicht mehrerer übereinander angeordneter Strukturlagen 2. Durch einen verstärkten Steg in der Mitte der Aussparung werden erhöhte Flächenanteile für die Knotenpunkte **6** zur Verfügung gestellt, so dass der Anteil an Katalysatorvolumen innerhalb der Struktur nicht wesentlich reduziert wird, aber der Wärmestrom durch den Stapel der verschiedenen Strukturlage noch weiter erhöht werden kann. Dies kann insbesondere bei hochaktivem Katalysator von Vorteil sein.

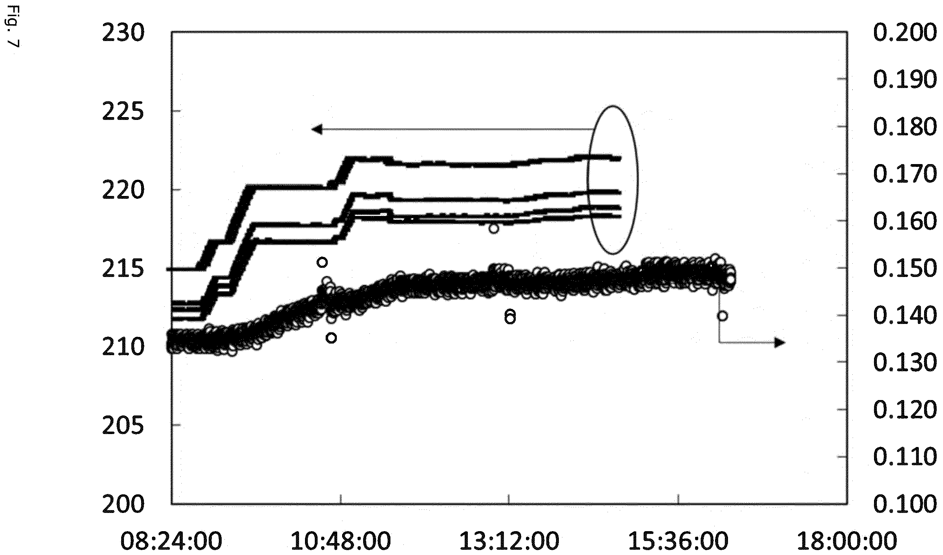

Figur 7 zeigt die in Beispiel 2 beschriebenen Messdaten. Auf der x-Achse ist die Zeit aufgetragen (im Format hh:mm:ss), auf der y-Achse links die Temperatur in °C und auf der y-Achse rechts die Methanselektivität.

### Bezugszeichenliste:

- 1: Schnittansicht Reaktor
- 2: Strukturlage(n) (bzw. Materialfolie)
- 3: Aussparung
- 4: Steg
- 5: Rand(bereich)
- 6: Kontaktpunkt (übereinanderliegender Strukturlagen)
- A: (Flussrichtung vom) Reaktionsmedium

### Beispiele:

Die Erfindung wird nun unter Bezugnahme auf die folgenden, nicht-limitierenden Beispiele weiter erläutert. Bei den Versuchen waren jeweils mehrere erfindungsgemäße Reaktoren zu einer erfindungsgemäßen Mehrfachreaktoranordnung übereinander angeordnet. Die Mehrfachreaktoranordnungen der beiden Beispiele waren annähernd identisch aufgebaut.

Die Reaktoren unterschieden sich nur in der Anzahl und Dicke der Strukturlagen (Folien) und hinsichtlich des Stapelaufbaus. Die gemeinsamen Daten sind:
- Katalysatorbett/Struktur-Länge 283 mm
- Katalysatorbett/Struktur-Breite 65 mm
- Quadratische Ausschnitte mit 6 mm
- Stegbreite 1.5 mm

Die Stapelfolge für Methanolsynthese (Beispiel 1) von oben oder unten:
- 2 Paare Strukturlagen (Reaktionsfolie) 0.6 mm dick mit jeweils dazwischenliegender und jeweils abschließender Decklage (unstrukturierter Platte) 1 mm dick
- Ein Kühlfolienpaar gemäß Stand der Technik (DE 10 2015 111 614 A1, Figur 2 - auch im Folgenden sind dies immer solche)
- 4 Paare Strukturlagen (Reaktionsfolie) 0.6 mm dick mit jeweils dazwischenliegender und jeweils abschließender Decklage (unstrukturierter Platte) 1 mm dick
- Ein Kühlfolienpaar gemäß Stand der Technik
- 4 Paare Strukturlagen (Reaktionsfolie) 0.6 mm dick mit jeweils dazwischenliegender und jeweils abschließender Decklage (unstrukturierter Platte) 1 mm dick
- Ein Kühlfolienpaar gemäß Stand der Technik
- 4 Paare Strukturlagen (Reaktionsfolie) 0.6 mm dick mit jeweils dazwischenliegender und jeweils abschließender Decklage (unstrukturierter Platte) 1 mm dick
- Ein Kühlfolienpaar gemäß Stand der Technik
- 4 Paare Strukturlagen (Reaktionsfolie) 0.6 mm dick mit jeweils dazwischenliegender und jeweils abschließender Decklage (unstrukturierter Platte) 1 mm dick
- Ein Kühlfolienpaar gemäß Stand der Technik
- 4 Paare Strukturlagen (Reaktionsfolie) 0.6 mm dick mit jeweils dazwischenliegender und jeweils abschließender Decklage (unstrukturierter Platte) 1 mm dick
- Ein Kühlfolienpaar gemäß Stand der Technik
- 2 Paare Strukturlagen (Reaktionsfolie) 0.6 mm dick mit jeweils dazwischenliegender und jeweils abschließender Decklage (unstrukturierter Platte) 1 mm dick

Die Stapelfolge für Fischer-Tropsch Synthese (Beispiel 2) von oben oder unten:
- 3 Paare Strukturlagen (Reaktionsfolie) 0.6 mm dick mit jeweils dazwischenliegender und jeweils abschließender Decklage (unstrukturierter Platte) 0.4 mm dick
- Ein Kühlfolienpaar gemäß Stand der Technik
- 5 Paare Strukturlagen (Reaktionsfolie) 0.6 mm dick mit jeweils dazwischenliegender und jeweils abschließender Decklage (unstrukturierter Platte) 0.4 mm dick
- Ein Kühlfolienpaar gemäß Stand der Technik
- 5 Paare Strukturlagen (Reaktionsfolie) 0.6 mm dick mit jeweils dazwischenliegender und jeweils abschließender Decklage (unstrukturierter Platte) 0.4 mm dick
- Ein Kühlfolienpaar gemäß Stand der Technik
- 5 Paare Strukturlagen (Reaktionsfolie) 0.6 mm dick mit jeweils dazwischenliegender und jeweils abschließender Decklage (unstrukturierter Platte) 0.4 mm dick
- Ein Kühlfolienpaar gemäß Stand der Technik
- 5 Paare Strukturlagen (Reaktionsfolie) 0.6 mm dick mit jeweils dazwischenliegender und jeweils abschließender Decklage (unstrukturierter Platte) 0.4 mm dick
- Ein Kühlfolienpaar gemäß Stand der Technik
- 5 Paare Strukturlagen (Reaktionsfolie) 0.6 mm dick mit jeweils dazwischenliegender und jeweils abschließender Decklage (unstrukturierter Platte) 0.4 mm dick
- Ein Kühlfolienpaar gemäß Stand der Technik
- 3 Paare Strukturlagen (Reaktionsfolie) 0.6 mm dick mit jeweils dazwischenliegender und jeweils abschließender Decklage (unstrukturierter Platte) 0.4 mm dick

### Beispiel 1 (Methanolsynthese):

Die Mehrfachreaktoranordnung wurde in einer MeOH-Synthese ausgehend von CO₂ und H₂ bei 30 bar und bei 250°C betrieben. Der Reaktionsfeed mit einem molaren Verhältnis von H₂:CO₂ von 3 (stöchiometrisch gemäß Reaktion) wurde mit einer Gesamtmenge von 120 bis 140 L/min (zu Normbedingungen) auf die Reaktionstemperatur vorgewärmt und in die Mehrfachreaktoranordnung geschickt.

Die Mehrfachreaktoranordnung war mit 257 g industriell verfügbarem hochaktiven Cu/ZnO/Al2O3-Katalysator der Kornfraktion 200 - 400 µm gefüllt. Nicht umgesetztes Edukt wurde nach Abtrennung von Methanol und Reaktionswasser mit einem Kompressor zu 90% zurückgeführt. Der Umsatz lag also durch die Kreislaufführung bei über 90%. Es wurden dabei zwischen 100 und 150 ml Methanol pro Stunde produziert. Die Mehrfachreaktoranordnung wurde dabei mit einem Siedewasserkreis bei erhöhtem Druck betrieben um die Reaktion zu kühlen. Es wurde keine Katalysatordesaktivierung über mehrere hundert Stunden gefunden, welche möglich wäre, wenn Temperaturgardienten in den Reaktoren auftreten würden.

### Beispiel 2 (Fischer-Tropsch Synthese):

Die Mehrfachreaktoranordnung wurde in einer Fischer-Tropsch-Synthese ausgehend von CO und H₂ bei 20 bar und bei einer Zieltemperatur von 215°C betrieben. Der Reaktionsfeed bestand aus 20.6 L/min CO, 44.3 L/min CO verdünnt mit 21.4 L/min N₂ (alle Angaben zu Normbedingungen). Der Feed wurde annähernd auf die Reaktionstemperatur vorgewärmt (210°C) und in die Mehrfachreaktoranordnung geschickt. Die Mehrfachreaktoranordnung war mit 450 g hochaktivem industriell hergestellten Kobalt-Katalysator der Kornfraktion 50 200 µm gefüllt. Es wurde wiederum mit einem Siedewasserkreis Wärme entfernt. Die Temperaturen in den Katalysatorschüttungen wurden entlang der Reaktionskoordinate erfasst. Die Temperaturen variierten zwischen 216.9°C bis 220.4°C bei einer Siedetemperatur des Wassers von 213°C. Somit lagen die Temperaturdifferenzen entsprechend der Messfehler im erwarteten Bereich (+ 3°C innerhalb der Schüttung; + 7°C zwischen Wassertemperatur und Katalysator; letztere Angabe ist dabei nicht entscheidend da hier der Wärmetransport durch die Wand zwischen den beiden Fluiden beeinflusst wird und den Gradienten dadurch augenscheinlich leicht erhöht). Da in diesem Beispiel die Mehrfachreaktoranordnung im single-pass (ein Durchgang ohne Rezyklierung nicht umgesetzten Gases) betrieben wurde, konnte hier der Umsatz an CO bei einem Reaktordurchgang bestimmt werden. Dieser lag bei etwa 69%. Figur 7 zeigt die vier aufgenommenen Temperaturen sowie den Verlauf der Methanselektivität bei einer Umstellung der Zieltemperatur von 212°C auf 218°C bei ansonsten identischen Bedingungen. Es ist eine schnelle Adaptierung der Reaktionstemperatur bei Umstellung des Siededrucks der Wasserkühlung ohne thermischen Runaway erkennbar. Außerdem lag bei der eingestellten Verdünnung mit N₂ (reduzierter CO Partialdruck) der Wert der Methanselektivität (bei Durchschnittstemperatur 220°C) im Erwartungswert von 15% bei isothermer Betriebsweise. Die Messung der Methanselektivtät ist auf der Zeitachse durch die Erfassung in der Analytik mit dazwischen angeordneten Volumina der Abscheidebehälter für die flüssigen und wachsartigen Produkte verschoben.

Die Selektivität wurde also dabei benutzt, um die Wärmeabfuhr aus dem Reaktionssystem zu bewerten, weil sich die Selektivitäten zu den verschiedenen Produkten abhängig vom erreichten Maß an Isothermie in der Katalysatorzone ändern. Die Ergebnisse aus der Wärmeabfuhr zeigten, dass die erwarteten Eigenschaften gegeben sind. Die erzielten Werte der Methanselektivität sind ein Indiz dafür, dass keine unentdeckten Hotspots vorhanden sind.

## Patentansprüche

1. Reaktor mit Multilagenstruktur umfassend
- eine obere fluiddichte Decklage,
- eine untere fluiddichte Decklage,
- fluiddichte Seitenwände
und dazwischenliegend mindestens einen Reaktionsraum, der durch mehrere übereinanderliegende, zu den Decklagen parallele Strukturlagen definiert wird, wobei
- die einzelnen Strukturlagen jeweils eine Struktur von periodisch in mehreren Reihen, jeweils Kante-an-Kante angeordneten Parallelogrammen, aufweisen und wobei die Flächen der Parallelogramme als Aussparungen und deren Ränder als Stege ausgestaltet sind,
- jede Strukturlage gegenüber der darüber bzw. darunter befindlichen um den Faktor 0,5±0,2 und 0,5±0,2 in x- und y-Richtung versetzt ist, wobei die größte Kantenlänge der Parallelogramme als 1 normiert ist und die x-Richtung vorgibt und die y-Richtung orthogonal zu dieser in der Ebene der Strukturlage ist,
- die Seitenkanten der Parallelogrammstrukturen in den Strukturlagen in Relation zu Vorder- und Rückseite des Reaktors um 30 bis 60° gedreht angeordnet sind, wodurch sich an der Vorder- und Rückseite des Reaktors unvollständige Parallelogrammstrukturen mit nicht komplett mit Stegen umgebenen Aussparungen ergeben,
- der Reaktionsraum von der Vorderseite des Reaktors flächig angeströmt wird, wobei das anströmende Fluid in die nicht komplett mit Stegen umgebenen Aussparungen strömt,
- Vorder- und Rückseite des Reaktors zum Zufluss bzw. Abfluss von Reaktionsmedium konfiguriert sind,
- die Deck- und Strukturlagen aus gut wärmeleitfähigem Material bestehen,
- die Kontaktpunkte und Flächen der Stege der übereinanderliegenden Strukturlagen miteinander vollständig verbunden sind,
- in den Aussparungen zwischen den Stegen der Strukturlagen Katalysatorschüttung angeordnet sein kann, bevorzugt angeordnet ist,
- und wobei die Überdeckung der Aussparungen von einer Lage durch die Stege der darüber liegenden Lage 30-60% betragen, und
- wobei das gut wärmeleitfähige Material ein Material mit einer Wärmeleitfähigkeit von 10 bis 400 W/(mK) ist.

2. Reaktor nach Anspruch 1, **dadurch gekennzeichnet, dass**
- die Strukturlagen jeweils eine Dicke von 0,3 mm bis 2 mm, bevorzugt 0,5 mm bis 1 mm aufweisen,
- die Stegbreite von 0,5 mm bis 4 mm, bevorzugt von 1 mm bis 3 mm, beträgt,
- die größte Seitenlänge der Aussparungen zwischen 2 mm und 20 mm, bevorzugt zwischen 4 mm und 12 mm, beträgt,
mit der Maßgabe, dass die Aussparungen mindestens um den Faktor 2, bevorzugt mindestens um den Faktor 3, breiter sind als die die Stegbreite.

3. Reaktor nach einem der vorhergehenden Ansprüche, insbesondere nach Anspruch 1, **dadurch gekennzeichnet, dass** das Verhältnis von Stegbreite zu längster Seitenlänge der Aussparungen zwischen 0,15 und 0,55, bevorzugt zwischen 0,25 und 0,45, liegt.

4. Reaktor nach einem der vorhergehenden Ansprüche, insbesondere nach Anspruch 1, **dadurch gekennzeichnet, dass** er ein Leervolumenanteil von 45 Vol.% bis 75 Vol.%, bevorzugt 50 Vol.% bis 70 Vol.%, besonders bevorzugt 60 Vol.% bis 70 Vol.%, aufweist.

5. Reaktor nach einem der vorhergehenden Ansprüche, **dadurch gekennzeichnet, dass** 2 bis 10 Strukturlagen, und insbesondere für maximal 15K, bevorzugt maximal 5K, Temperaturhub, zwischen 2 und 7, bevorzugt zwischen 3 und 6, Strukturlagen zwischen den Decklagen angeordnet werden.

6. Reaktor nach einem der vorhergehenden Ansprüche, **dadurch gekennzeichnet, dass** die Strukturlagen an den Vorder- und Rückseiten zusätzlich einen Rand oder mehrere Ränder mit eingearbeiteten Kanälen zur Verteilung des Reaktionsmediums bei Zu- und Abfluss aufweisen.

7. Reaktor nach einem der vorhergehenden Ansprüche, **dadurch gekennzeichnet, dass** der Reaktor neben den Decklagen und den Strukturlagen noch Zwischenlagen, die zwischen Strukturlagen angeordnet sind, mit der Maßgabe, dass auf jeder Seite einer Zwischenlage mindestens zwei Strukturlagen angeordnet sind, bevor eine weitere Zwischenlage oder eine Decklage angeordnet wird.

8. Reaktor nach einem der vorhergehenden Ansprüche, **dadurch gekennzeichnet, dass** die Stege an den Punkten, an denen sie mit denjenigen der darunter- bzw. darüberliegenden Strukturlagen in Kontakt stehen, verbreitert ausgeführt sind, bevorzugt als kreisförmige Verbreiterungen, und bevorzugt jeweils eine Verbreiterung in der Mitte jedes Steges.

9. Mehrfachreaktoranordnung umfassend mehrere Reaktoren nach einem der vorhergehenden Ansprüche, **dadurch gekennzeichnet, dass** eine Mehrzahl an Reaktoren gestapelt wird, wobei zwischen den einzelnen Reaktoren jeweils Wärmetauscherelemente angeordnet werden.

10. Verfahren zur Herstellung eines Reaktors gemäß einem der Ansprüche 1 bis 8, **dadurch gekennzeichnet, dass** er durch 3D-Druck oder Übereinanderlegen und dann Verschweißen der einzelnen Lagen, bevorzugt mittels Laserschweißen oder Diffusionsschweißen, hergestellt wird und optional in den Aussparungen zwischen den Stegen der Strukturlagen Katalysatorschüttung angeordnet wird.

11. Verfahren nach Anspruch 10, **dadurch gekennzeichnet, dass**
I) einzelne Strukturlagen gefertigt werden, bevorzugt durch Ausstanzen, Laserschneiden, Wasserstrahlschneiden oder Ausfräsen der Struktur aus einem Materialstück, einem Materialblech oder einer Materialfolie,
IIa1) mehrere Strukturlagen jeweils versetzt zueinander übereinander und zwischen einer oberen Decklage und einer unteren Decklage angeordnet werden, und
IIa2) der entstandene Multilagenstapel mittels Diffusionsschweißen über die jeweiligen Kontaktstellen und Kontaktflächen miteinander verbunden werden,
oder
IIb1) jeweils eine Strukturlage über eine vorherige Decklage oder Strukturlage angeordnet wird, dann
IIb2) mittels Laserschweißen die Kontaktpunkte und/oder Kontaktflächen miteinander verbunden werden,
IIb3) die Schritte IIb1) und IIb2) entsprechend der gewünschten Anzahl an Strukturlagen wiederholt werden, und
IIb4) eine abschließende Decklage aufgebracht und verschweißt wird,
wobei die einzelnen Strukturlagen so angeordnet werden, dass die Überdeckung der Aussparungen von einer Lage zur nächsten 30-60%, bevorzugt 30 bis 55%, betragen.

12. Verfahren nach Anspruch 11, **dadurch gekennzeichnet, dass** Schritt IIb4) ersetzt wird durch die Schritte:
IIb4a) eine Zwischenlage aufgebracht und verschweißt wird,
IIb4b) die Schritte IIb1) und IIb2) entsprechend der gewünschten nach der Zwischenlage angeordneten Anzahl an Strukturlagen durchgeführt werden,
IIb4c) die Schritte IIb4a) und IIb4b) sooft wiederholt werden, wie Zwischenlagen angeordnet werden sollen, und
IIb4z) eine abschließende Decklage aufgebracht und verschweißt wird.

13. Verfahren nach einem der Ansprüche 10 bis 12, **dadurch gekennzeichnet, dass** die Strukturlagen bei der Fertigung einen um die Struktur herumlaufenden Rand aufweisen, der bevorzugt nach der Verschweißung entfernt wird.

14. Verfahren nach Anspruch 13, **dadurch gekennzeichnet, dass** anschließend an die anderen Schritte in Vorder- und Rückseite der Strukturlagen Öffnungen für die Fluid Zu- und Ableitung gefräst werden.

15. Verwendung eines Reaktors gemäß einem der Ansprüche 1 bis 8 oder einer Mehrfachreaktoranordnung gemäß Anspruch 9 oder eines gemäß einem der Ansprüche 10 bis 14 hergestellten Reaktors für exotherme oder endotherme Reaktionen, bevorzugt exotherme Reaktionen, besonders bevorzugt Methanolsynthese oder Methanisierung oder Fischer-Tropsch-Synthesen, insbesondere Fischer-Tropsch-Synthesen.

## Claims

1. Reactor with multilayer structure comprising
- an upper fluid-tight cover layer,
- a lower fluid-tight cover layer,
- fluid-tight side walls
and at least one reaction space located therebetween, which is defined by several superimposed structural layers parallel to the cover layers, wherein
- the individual structural layers each have a structure of parallelograms arranged periodically in several rows, each arranged edge-to-edge, and wherein the areas of the parallelograms are designed as openings and their edges are designed as webs,
- each structural layer is offset by a factor of 0.5±0.2 and 0.5±0.2 in the x and y directions relative to the layer above and below it respectively, wherein the largest edge length of the parallelograms is standardised as 1 and specifies the x direction and the y direction is orthogonal to this in the plane of the structural layer,
- the side edges of the parallelogram structures in the structure layers are arranged rotated by 30 to 60° in relation to the front and rear sides of the reactor, resulting in incomplete parallelogram structures with openings not completely surrounded by webs at the front and rear sides of the reactor,
- the reaction space is laminary flowed against from the front side of the reactor, wherein the flowing-against fluid flows into the openings that are not completely surrounded by webs,
- the front and rear sides of the reactor are configured for the inflow and outflow of reaction medium,
- the cover and structural layers are made of material with good thermal conductivity,
- the contact points and areas of the webs of the superimposed structural layers are fully connected to each other,
- catalyst bed can be arranged, preferably is arranged, in the openings between the webs of the structural layers,
- and wherein the overlap of the openings of one layer by the webs of the overlying layer is 30-60%, and
- wherein the material with good thermal conductivity is a material with a thermal conductivity of from 10 to 400 W/(mK).

2. Reactor according to claim 1, **characterised in that**
- the structural layers each have a thickness of 0.3 mm to 2 mm, preferably 0.5 mm to 1 mm,
- the web width is from 0.5 mm to 4 mm, preferably from 1 mm to 3 mm,
- the largest side length of the openings is between 2 mm and 20 mm, preferably between 4 mm and 12 mm,
with the proviso that the openings are wider than the web width by at least a factor of 2, preferably at least a factor of 3.

3. Reactor according to one of the preceding claims, in particular according to claim 1, **characterised in that** the ratio of the web width to the longest side length of the openings is between 0.15 and 0.55, preferably between 0.25 and 0.45.

4. Reactor according to one of the preceding claims, in particular according to claim 1, **characterised in that** it has an empty volume portion of 45 vol.% to 75 vol.%, preferably 50 vol.% to 70 vol.%, particularly preferably 60 vol.% to 70 vol.%.

5. Reactor according to one of the preceding claims, **characterised in that** 2 to 10 structural layers, and in particular for a maximum of 15K, preferably a maximum of 5K, temperature lift, between 2 and 7, preferably between 3 and 6, structural layers are arranged between the cover layers.

6. Reactor according to one of the preceding claims, **characterised in that** the structural layers additionally have one or more edges on the front and rear sides with incorporated channels for distributing the reaction medium during inflow and outflow.

7. Reactor according to one of the preceding claims, **characterised in that**, in addition to the cover layers and the structural layers, the reactor also has intermediate layers which are arranged between structural layers, with the proviso that at least two structural layers are arranged on each side of an intermediate layer before a further intermediate layer or a cover layer is arranged.

8. Reactor according to one of the preceding claims, **characterised in that** the webs are widened at the points at which they are in contact with those of the underlying or overlying structural layers, preferably as circular widenings, and preferably one widening in the centre of each web.

9. Multiple reactor arrangement comprising several reactors according to one of the preceding claims, **characterised in that** a plurality of reactors are stacked, wherein heat exchanger elements are arranged between the individual reactors in each case.

10. Method for manufacturing a reactor according to one of claims 1 to 8, **characterised in that** it is produced by 3D printing or superimposing and then welding the individual layers, preferably by means of laser welding or diffusion welding, and optionally catalyst bed is arranged in the openings between the webs of the structural layers.

11. Method according to claim 10, **characterised in that**
I) individual structural layers are produced, preferably by punching, laser cutting, water jet cutting or milling out the structure from a piece of material, a sheet of material or a foil of material,
IIa1) several structural layers are arranged offset to each other, one above the other and between an upper cover layer and a lower cover layer, and
IIa2) the resulting multilayer stack is joined together by diffusion welding via the respective contact points and contact areas,
or
IIb1) in each case a structural layer is arranged over a previous cover layer or structural layer, then
IIb2) the contact points and/or contact areas are joined together by means of laser welding,
IIb3) steps IIb1) and IIb2) are repeated according to the desired number of structural layers, and
IIb4) a final cover layer is applied and welded,
wherein the individual structural layers are arranged in such a way that the overlap of the openings from one layer to the next is 30-60%, preferably 30 to 55%.

12. Method according to claim 11, **characterised in that** step IIb4) is replaced by the steps:
IIb4a) an intermediate layer is applied and welded,
IIb4b) steps IIb1) and IIb2) are carried out in accordance with the desired number of structural layers arranged after the intermediate layer,
IIb4c) steps IIb4a) and IIb4b) are repeated as often as intermediate layers are to be arranged, and
IIb4z) a final cover layer is applied and welded.

13. Method according to one of claims 10 to 12, **characterised in that** the structural layers have an edge running around the structure during production, which is preferably removed after welding.

14. Method according to claim 13, **characterised in that** subsequently to the other steps openings for the fluid inlet and outlet are milled into the front and rear sides of the structural layers.

15. Use of a reactor according to one of claims 1 to 8 or a multiple reactor arrangement according to claim 9 or a reactor manufactured according to one of claims 10 to 14 for exothermic or endothermic reactions, preferably exothermic reactions, particularly preferably methanol synthesis or methanisation or Fischer-Tropsch syntheses, in particular Fischer-Tropsch syntheses.

## Revendications

1. Réacteur à structure multicouche, comprenant
- une couche de couverture supérieure étanche aux fluides,
- une couche de couverture inférieure étanche aux fluides,
- des parois latérales étanches aux fluides,
et, entre celles-ci, au moins un espace de réaction défini par plusieurs couches structurelles superposées et parallèles aux couches de couverture, dans lequel
- les couches structurelles individuelles présentent chacune une structure de parallélogrammes disposés périodiquement en plusieurs rangées, respectivement bord à bord, et les surfaces des parallélogrammes sont conçues comme des évidements et leurs bords sont conçus comme des âmes,
- chaque couche structurelle est décalée par rapport à celle qui se trouve au-dessus ou au-dessous respectivement d'un facteur de 0,5±0,2 et de 0,5±0,2 dans les directions x et y, la plus grande longueur de bord des parallélogrammes étant normalisée comme 1 et définissant la direction x, et la direction y étant orthogonale à celle-ci dans le plan de la couche structurelle,
- les bords latéraux des structures en parallélogramme dans les couches structurelles sont disposés de manière à être tournés d'une valeur de 30 à 60° par rapport à la face avant et à la face arrière du réacteur, ce qui donne, sur la face avant et sur la face arrière du réacteur, des structures en parallélogramme incomplètes avec des évidements qui ne sont pas complètement entourés des âmes,
- l'espace de réaction est alimenté en fluide sur toute sa surface par la face avant du réacteur, le fluide arrivant s'écoulant dans les évidements qui ne sont pas complètement entourés des âmes,
- les faces avant et arrière du réacteur sont configurées respectivement pour l'entrée et la sortie d'un milieu réactionnel,
- les couches de couverture et les couches structurelles sont constituées d'un matériau à bonne conductivité thermique,
- les points de contact et les surfaces des âmes des couches structurelles superposées sont entièrement reliés entre eux,
- un lit de catalyseur peut être disposé, de préférence est disposé, dans les évidements entre les âmes des couches structurelles,
- et le recouvrement des évidements d'une couche par les âmes de la couche superposée est de 30 à 60 %, et
- le matériau à bonne conductivité thermique est un matériau qui présente une conductivité thermique de 10 à 400 W/(mK).

2. Réacteur selon la revendication 1, **caractérisé en ce que**
- les couches structurelles présentent chacune une épaisseur de 0,3 mm à 2 mm, de préférence de 0,5 mm à 1 mm,
- la largeur de l'âme est de 0,5 mm à 4 mm, de préférence de 1 mm à 3 mm,
- la plus grande longueur latérale des évidements est comprise entre 2 mm et 20 mm, de préférence entre 4 mm et 12 mm,
étant entendu que les évidements sont au moins 2 fois, de préférence au moins 3 fois, plus larges que la largeur de l'âme.

3. Réacteur selon l'une des revendications précédentes, en particulier selon la revendication 1,
**caractérisé en ce que** le rapport entre la largeur de l'âme et la longueur latérale la plus longue des évidements est compris entre 0,15 et 0,55, de préférence entre 0,25 et 0,45.

4. Réacteur selon l'une des revendications précédentes, en particulier selon la revendication 1,
**caractérisé en ce qu'**il présente un taux de volume vide compris entre 45 % et 75 % en volume, de préférence entre 50 % et 70 % en volume, de manière particulièrement préférée entre 60 % et 70 % en volume.

5. Réacteur selon l'une des revendications précédentes,
**caractérisé en ce que** 2 à 10 couches structurelles, en particulier pour une amplitude thermique de 15K au maximum, de préférence de 5K au maximum, 2 à 7 couches structurelles, de préférence 3 à 6 couches structurelles sont placées entre les couches de couverture.

6. Réacteur selon l'une des revendications précédentes,
**caractérisé en ce que** les couches structurelles présentent en supplément, sur les faces avant et arrière, un bord ou plusieurs bords avec des canaux incorporés pour la répartition du milieu réactionnel lors de l'entrée et de la sortie.

7. Réacteur selon l'une des revendications précédentes,
**caractérisé en ce que** le réacteur comporte, outre les couches de couverture et les couches structurelles, des couches intermédiaires qui sont placées entre les couches structurelles, étant entendu qu'au moins deux couches structurelles sont placées de chaque côté d'une couche intermédiaire avant qu'une autre couche intermédiaire ou une couche de couverture ne soit placée.

8. Réacteur selon l'une des revendications précédentes,
**caractérisé en ce que** les âmes sont réalisées de manière élargie aux points où elles sont en contact avec celles des couches structurelles situées en dessous ou au-dessus, de préférence avec des élargissements circulaires, et de préférence avec un élargissement au milieu de chaque âme.

9. Ensemble de plusieurs réacteurs comprenant plusieurs réacteurs selon l'une des revendications précédentes,
**caractérisé en ce qu'**une pluralité de réacteurs est empilée, des éléments d'échange de chaleur étant disposés respectivement entre les réacteurs individuels.

10. Procédé de fabrication d'un réacteur selon l'une des revendications 1 à 8,
**caractérisé en ce qu'**il est fabriqué par impression en 3D ou par superposition puis par soudage des couches individuelles, de préférence par soudage laser ou par soudage par diffusion, et **en ce que**, éventuellement, un lit de catalyseur est placé dans les évidements entre les âmes des couches structurelles.

11. Procédé selon la revendication 10,
**caractérisé en ce que**
I) des couches structurelles individuelles sont fabriquées, de préférence par poinçonnage, découpe au laser, découpe au jet d'eau ou par fraisage de la structure dans une pièce de matériau, une tôle de matériau ou une feuille de matériau,
IIa1) plusieurs couches structurelles sont placées les unes au-dessus des autres et entre une couche de couverture supérieure et une couche de couverture inférieure, en étant décalées les unes par rapport aux autres, et
IIa2) l'empilement multicouche obtenu est assemblé par soudage par diffusion par l'intermédiaire des points de contact et des surfaces de contact respectifs,
ou
Ilb1) une couche structurelle respective est placée au-dessus d'une couche de couverture ou couche structurelle précédente, puis
IIb2) les points de contact et/ou les surfaces de contact sont reliés entre eux par soudage au laser,
IIb3) les étapes Ilb1) et IIb2) sont répétées en fonction du nombre souhaité de couches structurelles, et
IIb4) une couche de couverture finale est appliquée et soudée,
les couches structurelles individuelles étant placées de manière à ce que le recouvrement des évidements d'une couche à l'autre soit de 30 à 60 %, de préférence de 30 à 55 %.

12. Procédé selon la revendication 11,
**caractérisé en ce que** l'étape IIb4) est remplacée par les étapes suivantes :
IIb4a) une couche intermédiaire est appliquée et soudée,
IIb4b) les étapes Ilb1) et IIb2) sont réalisées en fonction du nombre souhaité de couches structurelles placées après la couche intermédiaire,
IIb4c) les étapes IIb4a) et IIb4b) sont répétées autant de fois qu'il y a de couches intermédiaires à placer, et
IIb4z) une couche de couverture finale est appliquée et soudée.

13. Procédé selon l'une des revendications 10 à 12,
**caractérisé en ce que** les couches structurelles présentent, lors de la fabrication, un bord entourant la structure, qui est de préférence éliminé après le soudage.

14. Procédé selon la revendication 13,
**caractérisé en ce que**, à la suite des autres étapes, des ouvertures sont fraisées dans les faces avant et arrière des couches structurelles pour l'amenée et l'évacuation du fluide.

15. Utilisation d'un réacteur selon l'une des revendications 1 à 8 ou d'un ensemble de plusieurs réacteurs selon la revendication 9 ou d'un réacteur fabriqué selon l'une des revendications 10 à 14 pour des réactions exothermiques ou endothermiques, de préférence pour des réactions exothermiques, de manière particulièrement préférée pour la synthèse de méthanol ou la méthanisation ou les synthèses de Fischer-Tropsch, en particulier pour les synthèses de Fischer-Tropsch.
